# EUROPÄISCHE PATENTSCHRIFT

(11) **EP 0 448 921 B1**
(45) Veröffentlichungstag und Bekanntmachung des Hinweises auf die Patenterteilung: **11.08.1993**
(21) Anmeldenummer: 90890084.8
(22) Anmeldetag: 26.03.1990
(51) Int. Cl.: F16L 17/025, F16L 47/06

(54) **Rohrverbindung**
Pipe joint
Raccord pour tuyaux

(43) Veröffentlichungstag der Anmeldung: 02.10.1991
(73) Patentinhaber: Dietzel Gesellschaft m.b.H., A-1111 Wien (AT)
(72) Erfinder: Pöcksteiner, Ernst Dr., A-1111 Wien (AT); Hofmann, Oswald Ing., A-1111 Wien (AT)
(74) Vertreter: Collin, Hans, Dipl.-Ing. Dr.

(56) Entgegenhaltungen:
- DE-A- 2 731 749
- FR-A- 1 388 105
- US-A- 3 856 315

## Beschreibung

Die Erfindung betrifft eine Rohrverbindung, insbesondere Steckverbindung, vorzugsweise von Kunststoff- oder Metallrohren, bei denen das mit Ausnahme des angespitzten Endes mit zylindrischem Außenmantel ausgeführte Spitzende des einen Rohres in das zu einer Verbindungsmuffe aufgeweitete Ende des anderen Rohres eingeschoben ist, wobei Aufweitung nur im Abstand vom Muffenende innen eine ringförmige Vertiefung unterschiedlicher Tiefe zur Aufnahme des Dichtungsringes allein im Bereich dieser Vertiefung aufweist, sowie diese Muffe neben der Vertiefung mit zylindrischem Innenmantel ausgeführt ist und der Dichtungsring Bereiche unterschiedlicher Dicke besitzt, wobei in dessen muffenendseitigem Bereich ein verdickter Ringteil vorgesehen ist und mit diesem verdickten Dichtungsringteil mindestens ein gegenüber diesem dünnerer Dichtungsteil verbunden ist, wobei Verbindungsbereich der Innenmantel der Verbindungsmuffe beiderseits der Vertiefung einen gleichgroßen Durchmesser aufweist und das eingeschobene Rohr zumindest im Verbindungsbereich einen im Vergleich zum Innenmanteldurchmesser der Verbindungsmuffe kleineren, über seine ganze Länge mit Ausnahme des angespitzten Endes gleichgroßen Außendurchmesser besitzt.

Aufgabe der Erfindung ist es, eine dichte Rohrverbindung bei leicht einzuhaltenden Erzeugungstoleranzen und unter auf die Praxis abgestimmten Verlegungsbedingungen sicherzustellen. Dabei soll auch eine Verringerung der Vorspannung des eigentlichen Dichtelements bzw. Dichtringes ermöglicht werden, wodurch die Montage vereinfacht wird. Auch die Herstellung soll vereinfacht werden.

Diese Bedingungen erfüllt die Steckverbindung nach der AT-B-340 728 nicht in ausreichendem Ausmaß. Dies liegt einerseits daran, daß die Länge des Dichtungsringes gering ist, und anderseits vor allem daran, daß zwischen diesem Dichtungsring und dem Muffenhals die Muffeninnenwand konisch verläuft bzw. sich verjüngt. Es ergeben sich daher Probleme bei der Verlegung, insbesondere wenn es schwierig ist, die Achsen von Muffe und einzusetzendem Rohrende einigermaßen bzw. ausreichend in Übereinstimmung zu bringen. Außerdem bedeutet die Herstellung der konischen Innenwand der Muffe und die demgemäß an deren muffenhalsseitigem Ende erforderliche genaue Passung einen erheblichen Mehraufwand.

Auch die Konstruktion nach der AT-B-366 210 bringt keine befriedigende Lösung, was vor allem mit der Ausbildung der Dichtung und der diese aufnehmenden Vertiefung zusammenhängt. Es ist zwar ein verhältnismäßig langer Dichtungsring vorhanden, der einen verdickten und einen damit verbundenen dünneren Teil aufweist. Der verdickte Teil besitzt vor allem an seiner dem Muffenhals zugewandten Seite eine verhältnismäßig flache Flanke, was den Sitz dieses Dichtungsringteiles in der dafür vorgesehenen Muffenvertiefung nachteilig beeinflussen kann. Außerdem hat dieser Dichtungsringteil an seiner dem Muffenende zugewandten Seite eine verkürzte Flanke, so daß beim Einführen des Rohres leichter Fremdkörper in die Dichtung eingebracht werden können, was deren Funktion tangiert. Außerdem läuft der dünnere Dichtungsringteil in der Einführungsrichtung des Rohres in die Muffe trichterförmig zusammen und besitzt eine sich dann konisch erweiternde Verschlußlippe, die im nicht gekuppelten Zustand an der Wand der Muffenvertiefung anliegt. Beim Einführen des Rohres in die Kupplung bzw. Dichtung muß somit eine beachtliche Vorspannung im Bereich der stark aufzuweitenden Dichtung überwunden werden.

Die aufgezeigten Nachteile bzw. Schwierigkeiten werden gemäß der Erfindung dadurch weitestgehend vermieden und gleichzeitig die eingangs angeführten Aufgaben in erheblichem Ausmaß dadurch gelöst, daß - ausgehend von der Rohrverbindung der eingangs charakterisierten Art - bei zusammenfallenden Achsen der Muffe und des eingeführten Rohres gleiches, auch bei zusammengesetzter Rohrverbindung vorhandenes Spiel zwischen dem Außenmantel dieses Rohres und dem Innenmantel der Muffe beiderseits der Vertiefung - ausgenommen im Bereich des Muffenhalses und im Bereich des Spitzendes des Rohres - vorgesehen ist, wobei der dünnere Dichtungsteil bereits vor Einbringung der Dichtung in die Rohrverbindung einen durchschnittlich achsparallel verlaufenden Mantel aufweist. Dieses Spiel bzw. der Abstand zwischen Muffeninnenmantel und Außenmantel des eingeschobenen Rohres im Verbindungsbereich sind selbst dann vorhanden, wenn extreme Fertigungs- bzw. Herstellungstoleranzen zustandekommen bzw. zulässig sind, also der kleinste Durchmesser des Muffeninnenmantels und der größte Außendurchmesser des eingeschobenen Rohres bei der Herstellung der vorerwähnten Teile einer Rohrverbindung zusammentreffen bzw. vorhanden sind. Das vorerwähnte Spiel kombiniert mit der angeführten Gestaltung der Dichtung erleichtert in erheblichem Umfang die Montage der Rohrverbindung, zumal die Herstellung der Verbindung auch bei gekrümmten Rohrverlegungen ermöglicht wird; denn das Spiel gestattet Abweichungen zwischen der Muffen- und der Rohrachse bzw. entsprechende Winkelbewegungen zwischen Muffe und einzuführendem Rohrende, wobei die erfindungsgemäße Ausbildung der Dichtung nicht nur die Rohreinbringung erleichtert, sondern auch die not-wendige Dichtungsfunktion sichert. Das hiebei gewünschte Spiel wird erfindungsgemäß dann besonders gewährleistet, wenn der Durchmesser des Innenmantels der Verbindungsmuffe beiderseits der Vertiefung sich zum Außendurchmesser des eingebrachten Rohres annähernd 11,1 : 11 verhält (d.h. daß z.B. diese Durchmesser 111 mm bzw. 110 mm betragen).

Im Gegensatz hiezu wird bei der Ausbildung nach der US-A-3 856 315 weder ein stets vorhandenes, gleiches Spiel zwischen dem Innenmantel der Muffe und dem Außenmantel des darin eingeführten Rohres beiderseits der Dichtungsring-Vertiefung, noch ein dünnerer Dichtungsteil mit einem bereits vor Einbringung der Dichtung in die Rohrverbindung durchschnittlich achsparallel verlaufenden Mantel vorgeschrieben. Vielmehr ist der Durchmesser des Innenmantels der Muffe nur um Bruchteile eines Millimeters größer als der Durchmesser des Außenmantels des eingeführten Rohres, wobei dieser Mantel dazu noch bevorzugt leicht konisch ausgebildet ist. Ein auch bei zusammengesetzter Rohrverbindung gesichertes gleiches Spiel kann somit beim Bekannten nicht gewährleistet werden. Dazu kommt, daß gemäß der US-PS 3 856 315 der dünnere Dichtungsteil einen konisch ausgebildeten Innenmantel aufweist. Die erfindungsgemäßen Montage- und Abdichtungsvorteile sind somit beim Bekannten nicht sichergestellt.

Bei der Herstellung der Rohrverbindung bzw. bei der Verlegung ergeben sich weitere Vorteile, insbesondere auch eine ausreichende Führung des Rohrendes beim Einbringen, wenn der Dichtungsring, der aus dem dünneren Dichtungsringteil mit achsparallel verlaufendem Mantel und einem damit verbundenen verdickten Teil mit einem Querschnitt mit steilen Flanken, insbesondere mit trapezförmigem Querschnitt, besteht, sowie wenn die diesen Dichtungsring aufnehmende Muffenvertiefung, die im Bereich des Vertiefungsteiles einen Querschnitt mit steilen Flanken, insbesondere mit etwa trapezförmigen Flanken, besitzt, einen geringeren Abstand von Muffenende als von Muffenhals aufweist, wobei sich diese Abstände vorzugsweise etwa wie 50 : 80 verhalten, bei einer Gesamtlänge des Dichtungsringes bzw. der Muffenvertiefung von annähernd 37,5 bzw. 46 mm annähernd 50 zu 80 mm betragen.

Gemäß der weiteren Ausgestaltung der Erfindung wird an der Innenwand des mit dem dünneren Dichtungsringteil mit achsparallel verlaufendem Mantel verbundenen verdickten Dichtungsringteiles, insbesondere in der Innenwandmitte, eine zur Ringachse gerichtete ringförmige Verdickung angeordnet. Damit wird nicht nur die Abdichtung verbessert, sondern auch das Abfangen von Fremdkörpern verbessert.

Eine Blockierung von Fremdkörpern bei der Rohreinführung wird besonders gefördert, wenn die Flanken des mit dem dünneren Dichtungsringteil mit achsparallel verlaufendem Mantel verbundenen verdickten Dichtungsringteiles bzw. die Flanken des Vertiefungsteiles mit größerer Tiefe, insbesondere die Trapezflanken, vor allem die muffenendseitigen Flanken, einen Winkel von 15 bis 25°, insbesondere von 20°, mit queraxialen Ebenen einschließen. Führung bzw. Dichtungseffekt fallen besonders günstig aus, wenn das Verhältnis der Länge des mit dem dünneren Dichtungsringteil mit achsparallel verlaufendem Mantel versehenen Dichtungsringes zum Rohrdurchmesser mindestens 0,2 : 1, maximal 0,8 : 1, beträgt.

Um hohe Betriebssicherheit bzw. lange Betriebsdauer besonders zu gewährleisten, wird zweckmäßigerweise die Shore-Härte des mit dem dünneren Dichtungsringteil mit achsparallel verlaufendem Mantel versehenen Dichtungsringes zwischen 40 ± 5 und 56 ± 5 Shore A gewählt, wobei das Ringmaterial bevorzugt aus Elastomeren, Copolymerisaten, aushärtendem bzw. thermoplastischem elastischen Kunststoff, Polyäthylen, beispielsweise Gummi, besteht. Die günstigen Dichtungseffekte werden besonders unterstützt, wenn der dünnere Dichtungsringteil eine annähernd achsparallel verlaufende bzw. zylindrische Wand mit wellenförmigem Querschnitt mit annähernd konstanter Stärke aufweist, wobei bevorzugt mindestens zwei Dichtungsringwellen vorgesehen sind und zweckmäßig das Ende der letzten Querschnittswelle von mehreren, insbesondere drei, Querschnittswellen einwärts gerichtet ist bzw. wenn der dünnere Dichtungsringteil eine annähernd achsparallele bzw. zylindrische Wand aufweist, an der innen zwei oder mehrere ringförmige Dichtungsrippen vorgesehen sind, wobei bevorzugt außerdem an dieser zylindrischen Wand außen, insbesondere axial zu den innen angeordneten Dichtungsrippen versetzte, ringförmige Dichtungsrippen vorhanden sind. Die Einführung der Rohrenden bei gleichzeitiger guter Abdichtung kann dadurch erreicht werden, daß die Innendurchmesser sämtlicher Dichtungsrippen bzw. sämtlicher einwärts gerichteter Wellen annähernd gleich groß sind bzw. daß die Außendurchmesser sämtlicher Dichrungsrippen bzw. sämtlicher auswärts gerichteter Wellen annähernd gleich groß sind bzw. daß der Innendurchmesser des dünneren Dichtungsringteiles bzw. dessen Innenrippen bzw. dessen einwärts gerichteter Dichtungswellen kleiner ist als der Innendurchmesser des verdickten Dichtungsringteiles, insbesondere von dessen muffenendseitiger Flanke und/oder von dessen ringförmiger Verdickung an dessen Innenwandmitte, sich vorzugsweise wie 10,5 : 10,9 verhalten, was beispielsweise bei einer Höhe des verdickten Dichtungsringteiles von 15,5 mm 105 bzw. 109 mm ergibt.

Elastizität und Gewicht können günstig gestaltet werden, wenn der mit dem dünneren Dichtungsringteil verbundene verdickte Dichtungsringteil, insbesondere der Dichtungsringteil mit etwa trapezförmigem Querschnitt an der einwärts gerichteten Seite zwischen den Flanken und der ringförmigen Verdickung ausgehöhlt ist. Eine gute Rohrführung beim Einbringen des Rohres in die Muffe wird gefördert, wenn beispielsweise das Verhältnis der Länge des zylindrischen Innenmantels des vor der Dichtungsaufweitung befindlichen Muffenendteiles zum Durchmesser des Rohrspitzendes 0,2 : 1, insbesondere 0,4 : 1, beträgt. Das Eindringen von Fremdkörpern wird besonders verhindert, wenn die muffenendseitige Flanke des verdickten Dichtungsringteiles nach innen vorsteht bzw. länger ist als die in Verbindungsstellung anliegende Flanke der diesen Dichtungsringteil aufnehmenden Muffenvertiefung der Rohrmuffe, und vorzugsweise auch länger als die Flanke der Muffe ist.

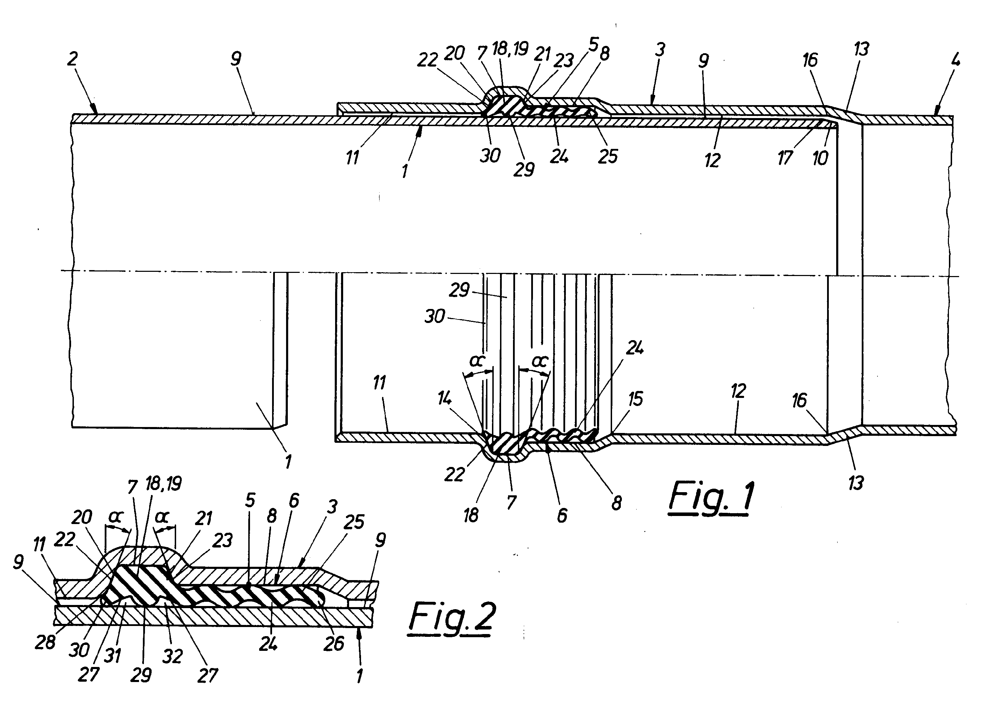

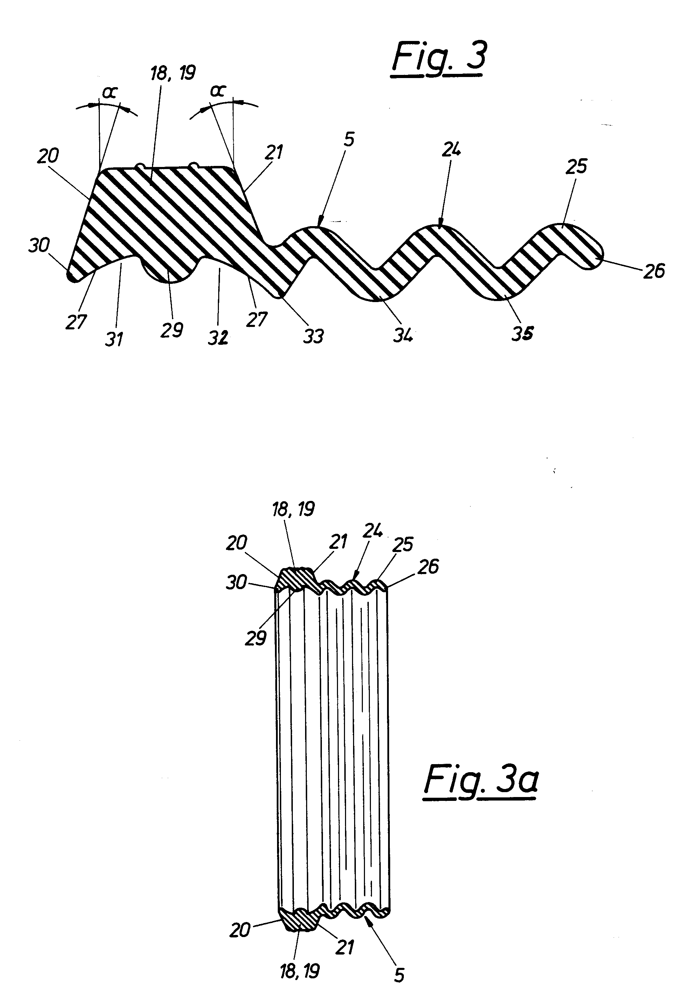

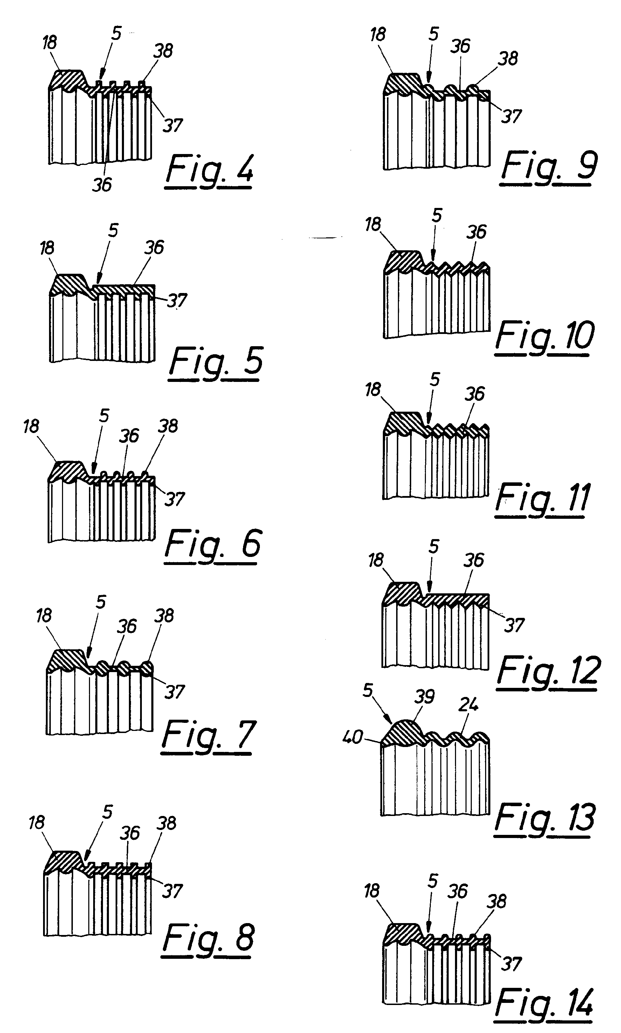

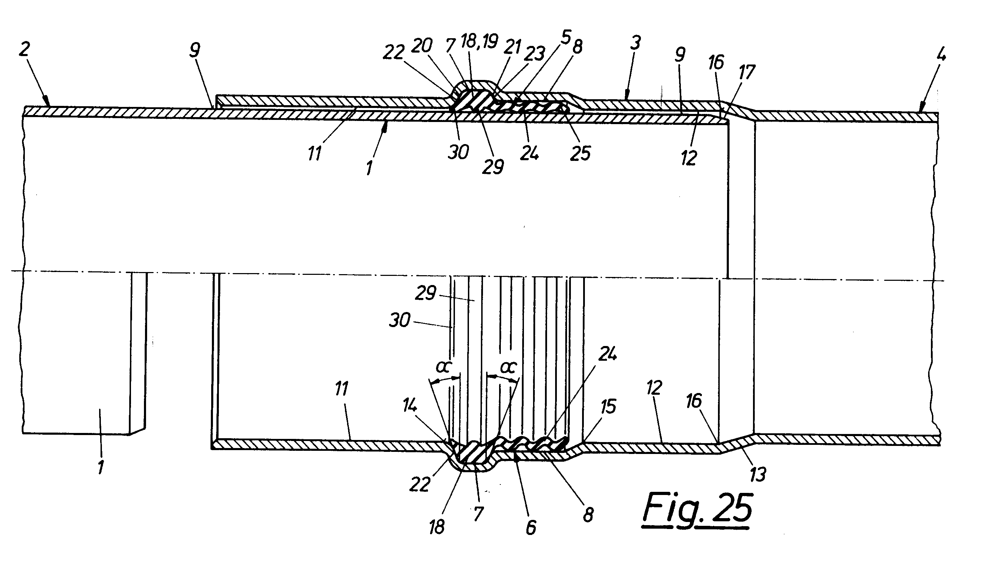

An Hand der Zeichnung werden Ausführungsbeispiele der Erfindung beschrieben. Dabei veranschaulichen Fig. 1 eine Rohrverbindung zum Teil im Axialschnitt, zum Teil in Ansicht, Fig. 2 ein Detail davon, u.zw. im Dichtbereich, im Schnitt, und die Fig. 3 bzw. 3a den Querschnitt des Dichtungsringes, die Schnitte gemäß den Fig. 2 und 3 in im Vergleich zur Darstellung nach Fig. 1 vergrößertem Maßstab. Die Fig. 4 bis 24 zeigen Teilaxialschnitte durch hier einsetzbare Dichtungsringe und Fig. 25 gibt eine weitere Ausbildung der Rohrverbindung zum Teil im Axialschnitt, zum Teil in Ansicht wieder, wobei der Muffenteil zwischen der Vertiefung für den Dichtungsring und dem Muffenende gegenüber der Ausführung nach Fig. 1 verlängert ist.

Im folgenden werden gleiche bzw. ähnliche bzw. ähnlich funktionierende Teile mit gleichen Bezugszeichen versehen. Die Rohrverbindung besteht gemäß den Fig. 1 und 2 sowie Fig. 25 aus dem Spitzende 1 des Rohres 2 und dem zur Muffe 3 aufgeweiteten Ende des Rohres 4. Für die Aufnahme des Dichtungsringes 5 besitzt die Muffe 3 im Abstand von ihrem Ende eine ringförmige Vertiefung 6. Diese Vertiefung 6 hat unterschiedliche Tiefen, wie bei 7 und 8 ersichtlich ist, wozu besonders auf Fig. 2 verwiesen wird. Die Rohre können aus Kunststoff, z.B. Polyvinylchlorid, Polyäthylen, Polypropylen, Plexiglas, Polymethacrylat, Polyphenylenoxid, Polyphenylenether bzw. Polykarbonat oder aus armiertem bzw. faser- bzw. glasfaserverstärktem Kunststoff bestehen. Es kommen dafür auch Metalle, z.B. Stahl, Gußeisen, legierter Stahl und auch Nichteisenmetalle, z.B. Aluminium und Kupfer in Frage. Auch Steinzeugrohre, Faser-, insbesondere Asbestzementrohre, und Betonrohre, armiert oder unarmiert, können die geschilderten Rohrverbindungen und Dichtungen erhalten. Die Dichtringe selbst können aus Elastomeren, die thermoplastisch bzw. aushärtend sein können, aus Gummi bzw. sonstigen elastischen Kunststoffen od.dgl. bestehen, wobei auch Copolymerisate, Polyäthylen u.dgl. in Frage kommen. Nicht nur Rohre mit glatten Mänteln, sondern auch profilierte Rohre, insbesondere Wellrohre, können mit den beschriebenen Rohrverbindungen versehen werden.

Der Außenmantel 9 des Rohres 2 ist mit Ausnahme seines angespitzten Endes 10 durchlaufend zylindrisch ausgebildet. Die Muffe 3 besitzt in den neben der Vertiefung 6 befindlichen Teilen 11 und 12 mit Ausnahme des Muffenhalses 13 einen zylindrischen Innenmantel, der in diesen Teilen 11 und 12 gleichen Durchmesser bzw. gleiche innere Weite hat. Zwischen dem vorerwähnten Außenmantel 9 und den Innenmantelteilen 11 und 12 ist ein Spiel vorhanden, das vom Muffenende bis zum muffenendseitigen Beginn 14 der Vertiefung 6 und vom muffenendfernen Ende 15 der Vertiefung 6 bis zum Beginn 16 der Einschnürung des Muffenhalses 13 bzw. bis zum Beginn 17 des angespitzten Endes 10 des eingeführten Rohres 2 bei Übereinstimmung der Rohr- und der Muffenachse gleich groß ist. Somit kann z.B. der Außendurchmesser des eingeführten Rohres 2 - zumindest im Bereich der Rohrverbindung - 110 mm und der Innendurchmesser der Muffe in den Bereichen 11 und 12 111 mm betragen. Dieses Spiel bzw. der Abstand zwischen Muffeninnenmantel und Außenmantel des eingeschobenen Rohres im Verbindungsbereich sind selbst dann vorhanden, wenn extreme Fertigungs- bzw. Herstellungstoleranzen zustandekommen bzw. zulässig sind, also der kleinste Durchmesser des Muffeninnenmantels und der größte Außendurchmesser des eingeschobenen Rohres bei der Herstellung der vorerwähnten Teile einer Rohrverbindung zusammentreffen bzw. vorhanden sind. Die Böden der Vertiefung 6, d.h. hier der Vertiefungsteile 7 und 8 sind hier ebenfalls zylindrisch ausgebildet und haben beispielsweise Durchmesser von 115 mm im Bereich 8 und von 124,5 mm im Bereich 7. Diese Böden können unter Umständen auch konkav oder konvex (im Querschnitt gesehen) ausgebildet sein. Allgemein wird zwischen dem Außendurchmesser des eingeführten Rohrendes 1,2 und dem Innendurchmesser der Muffenteile 11,12 ein Verhältnis von etwa bzw. genau 110 : 111 bzw. 11,0 : 11,1 bevorzugt.

Der Dichtungsring 5 besitzt einen verdickten Teil 18 mit einem Querschnitt 19 mit steilen Flanken 20,21, hier mit etwa trapezförmigem Querschnitt (Fig. 2,3!). Der Teil 7 der Muffenvertiefung 6 hat ebenfalls steile Flanken 22,23 und ebenfalls trapezförmigen Querschnitt, wobei die Form des Dichtungsringes und die Form dieser Vertiefung im Bereich der Dichtungsringverdickung 18 einander unter Berücksichtigung der im Betrieb zustandekommenden Verformung angepaßt sind.

Mit dem verdickten Teil 18,19 des Dichtungsringes 5 ist ein gegenüber diesem dünnerer Dichtungsringteil 24 in Form eines im Mittel etwa achsparallel verlaufenden bzw. etwa zylindrischen Mantels mit wellenförmigen Querschnitt verbunden. Der Querschnitt dieser Wellen besitzt annähernd konstante Stärke bzw. Dicke. Hier sind drei Wellen vorgesehen, wobei die vom verdickten Ringteil 18,19 am weitesten entfernte Welle 25 mit einem nach innen gerichteten Ast 26 endet (Fig. 2,3,3a!).

Wie besonders aus den Fig. 2 und 3 ersichtlich, ist die muffenendseitige Flanke 20,22 des verdickten Dichtungsteiles 18,19 bzw. der diesen aufnehmenden Vertiefung 7 länger ausgebildet als die daran angrenzende Innenwand 27 dieses Dichtungsringteiles bzw. als die Flanke 21, an welche der dünnere etwa achsparallel verlaufende Dichtungsteil 24 angeschlossen ist. Damit wird ermöglicht, daß auch nach dem Einbau des Dichtungsringes 5 in die hiefür vorgesehene Muffenvertiefung 6 bzw. Muffenaufweitung bzw. nach Herstellung der Rohrverbindung die muffenendseitige Flanke 20 des verdickten Dichtungsringteiles 18,19 nicht nur über die Innenwand 27 dieses Dichtungsringteiles sondern auch über die Innenkante 28 der benachbarten Flanke 22 der sie aufnehmenden Muffenvertiefung nach innen bzw. in Richtung der Ring- bzw. Rohr- bzw. Muffenachse bei 30 vorspringt (Fig. 2,3!). Außerdem ist zur weiteren Abdichtung im Zentrum des verdickten trapezförmigen Dichtungsteils 18,19 eine ringförmige Verdickung 29 vorgesehen.

Die Flanken 20,21 des verdickten Dichtungsringteiles 18,19 bzw. die Flanken 22,23 des Teils 7 der Vertiefung 6 mit größerer Tiefe bzw. die Flanken der trapezförmigen Querschnitte schließen einen Winkel α von etwa 20° mit queraxialen Ebenen ein (Fig. 2,3!). Es sind Winkel α zwischen 15° und 25° denkbar.

Wie der Fig. 1 zu entnehmen ist, befindet sich mit Vorteil die Vertiefung 6 für den Dichtungsring 5 näher dem Muffenende, u.zw. hier in einem Abstand von etwa 50 mm vom Muffenende, und in einem größeren Abstand, hier von etwa 80 mm, vom Muffenhals 13.

Die dargestellte Ausführung des Dichtungsringes in Verbindung mit deren Anordnung in der Rohrmuffe bzw. mit der ersichtlichen Rohrverbindung ergibt eine besonders gute Abdichtung im Bereich der Rohrverbindung. Dies gilt für die verschiedensten durch die Rohre zu führenden bzw. zu transportierenden Medien, also sowohl für Flüssigkeiten, insbesondere Wasser, als auch Gase, insbesondere Luft, auch für Unterdruck- bzw. Vakuumleitungen; dabei kann es sich um Zuleitungs- oder Abflußrohre, Kanäle bzw. Leitungen für Chemikalien bzw. Fäkalien handeln. Man kann praktisch absolute bzw. zumindest weitestgehend absolute Dichtheit im Bereich der Rohrverbindung erreichen.

Wie aus der oben beschriebenen Darstellung ersichtlich, besteht das hier vorliegende multifunktionelle ringförmige Dichtelement 5 aus einer Abstreiflippe bzw. Reinigungslippe 30, einer ersten Schnutzkamner 31 (Fig. 3!), einer bereits oben erwähnten Stütz- und Dichtlippe 29, einer zweiten Schmutzkammer 32 sowie vier weiteren Dichtlippen 33,34,35 und 26. Durch die spezifische Ausbildung des Dichtelementes 5 mit steilen trapezförmigen Flanken 20,21 im ersten Drittel - wobei die Flanke 20 verlängert ist und damit zu einer Reinigungslippe 30 wird - wird dieses Dichtelement in einer entsprechend ausgeformten Muffenvertiefung 6 praktisch unverrückbar festgehalten, zumal im Bereich der Flanken ein beachtlicher Reibungsschluß vorliegt. Die Wellen bzw. Rippen 33,34 und 35 haben hier etwa den gleichen Innendurchmesser. Alle dargestellten Wellen haben hier auch etwa den gleichen Außendurchmesser.

Das einzuführende Rohr 2 bzw. dessen Spitzende 1 wird zunächst durch die Reinigungslippe 30 von anhaftendem Schmutz wie z.B. Erdreich, Sand bzw. Kleingestein gereinigt. Der abgestreifte Schmutz wird dabei vor der Reinigungslippe 30 im Bereich der vorderen Flanke 20 in dem durch das Spiel zwischen dem Außenmantel 9 des Rohres 2 und dem Innenmantel 11 der Muffe 3 gebildeten Hohlraum aufgenommen. Beim weiteren Einschieben des Rohres 2 drückt das Spitzende 1 über den im Mittelbereich des trapezförmigen ersten Drittels des Dichtelementes 5 angeordneten Dicht- und Stützring 29 diesen bzw. den verdickten Dichtungsringteil 18,19 in die vorgesehene Ausnehmung 6,7,8 in der Muffe 3 bzw. insbesondere gegen die trapezförmigen Flanken 22,23 (Flankenwinkel α zwischen 15° und 25°) in der Muffe 3. Dadurch wird ein Ausschieben wie bei bisherigen Systemen praktisch unmöglich und ein Einkleben ist daher nicht erforderlich.

Um eine konzentrische Einführung des Rohres 2 bzw. dessen Spitzendes 1 in das Dichtelement bzw. den Dichtungsring 5 zu erreichen und die sonst immer wieder auftretenden Verletzungen der Dichtung bei zu kurzer Rohrführung zu vermeiden, wird hier die Rohrmuffe im Bereich vor dem Dichtelement als sogenannte Langmuffe (Führungslänge 1) ausgeführt, wobei das Verhältnis Rohraußendurchmesser d zu Führungslänge 1 beispielsweise 0,2, insbesondere mindestens 0,4 und maximal 1,0 betragen kann.

Setzt man die Montage der Rohrverbindung fort, so erreicht in der Folge das eingeführte Rohr die zweite Dichtlippe 33 - gegebenenfalls noch anhaftender Schmutz lagert sich vor dieser in der zweiten Schnutzkammer 32 ab - und verstreckt den mit drei weiteren Dichtlippen ausgestatteten und wellenförmig ausgebildeten Teil 24 des Dichtelementes in axialer Richtung zum Muffenhals 13 hin, wodurch die weiteren Dichtlippen an das Rohr 2 gepreßt werden.

Diese spezifische Ausführung des multifunktionellen Dichtelementes bzw. Dichtungsringes 5 erlaubt es, zwischen Rohraußen- und Muffeninnendurchmesser ein größeres Spiel als sonst üblich vorzusehen, wodurch eventuelle Erzeugungstoleranzen problemlos überbrückt und auch die Vorspannung des Dichtelementes gegenüber dem einzuführenden Rohr 2 verringert werden können, so daß die Montage einfach und leicht ohne Zuhilfenahme von Werkzeugen oder Vorrichtungen von Hand aus möglich ist. Außerdem kann demnach die Muffenführung durchgehend im gesamten Muffenbereich zylindrisch ausgeführt werden, wodurch Fertigung und Werkzeugherstellung wesentlich vereinfacht und kostengünstiger werden. Darüber hinaus ermöglichen die breite bzw. lange Ausführung der Dichtung in Kombination mit dem größeren Spiel sowie die zahlreichen, hier insgesamt fünf Dichtlippen eine größere Beweglichkeit der Muffenverbindung trotz optimaler Dichtheit, was insbesonders bei in der Praxis unvermeidbaren Versetzungen der Mittelachsen der zu verbindenden Rohre durch Niveauunterschiede der Rohrgrabensohle bzw. bei je nach Werkstoff eventuell möglichen kurvigen Verlegungen von Vorteil ist. Um diesen Effekt im weitestgehenden Ausmaß zu erzielen, ist vorteilhaft das Verhältnis Rohrdurchmesser d zu Dichtelementlänge L mindestens 1 : 0,2, sollte aber aus wirtschaftlichen Gründen 1 : 0,8 nicht übersteigen. Eine weitere große Bedeutung kommt der Shore-Härte des Dichtelementes zu; sie soll zwischen einem Minimum 40 ± 5 und einem Maximum 56 ± 5 Shore A liegen.

Bei Druck-, Abfluß- und Kanalrohren, also Systemen mit Innendruck, wirkt dieser gegen den im Bereich des zweiten und dritten Drittels liegenden wellenförmigen Teil 24 des Dichtringes bzw. Dichtelementes 5 und drückt jenen in Richtung Muffenöffnung, wodurch eine direkte Beziehung Druck : Dichtheit eintritt; je höher der Druck, desto dichter die Rohrverbindung.

Ein von außen wirkender Druck durch Grundwasser, wie z.B. bei Kabelkanalsystemen, wirkt gegen die Reinigungslippe 30 und drückt diese gegen das Rohr in Richtung Muffenhals 13, wodurch sie wie die hier nachfolgenden weiteren fünf Dichtlippen 29,33,34,35 und 26 ebenfalls zur Dichtlippe wird und somit hier sechs Dichtlippen ein Eindringen von Grundwasser wirksam verhindern.

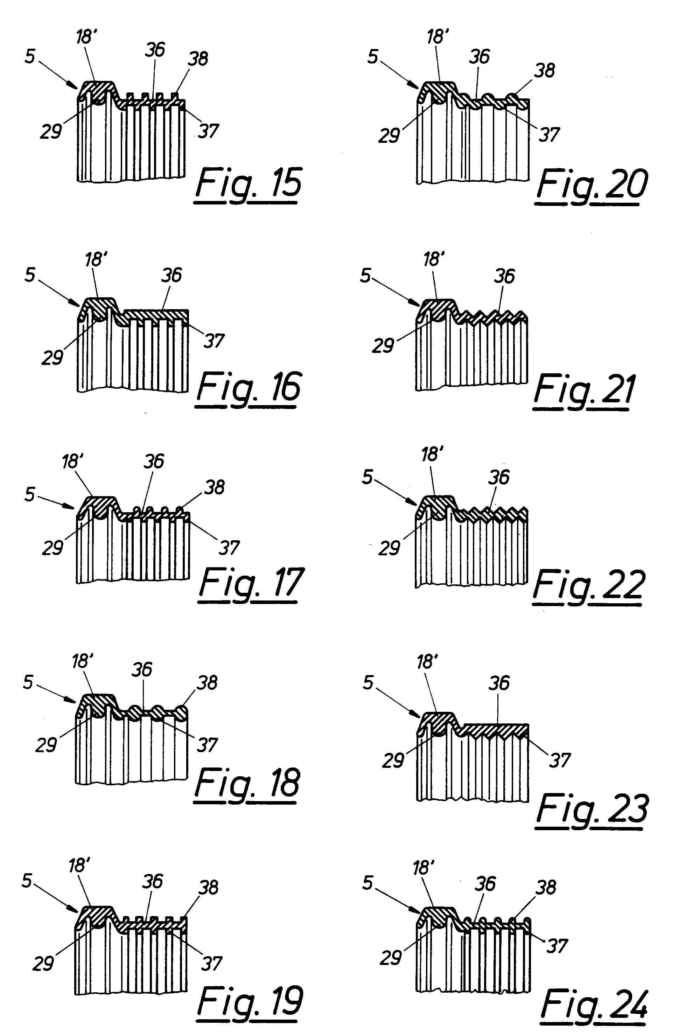

Die Fig. 4 bis 24 zeigen weitere Ausführungen von in die oben beschriebenen Rohrverbindungen einsetzbaren Dichtungsringen 5. Dabei sind für den dünneren Dichtungsteil zwar wieder achsparallele bzw. zylindrische Wände 36 vorgesehen, an denen innen Rippen 37 vorhanden sind (Fig. 5, Fig. 12, Fig. 16). An diesen Wänden können auch außen Rippen 38 vorgesehen sein (Fig. 4, Fig. 6, Fig. 7, Fig. 8, Fig. 9, Fig. 11, Fig. 14, Fig. 15, Fig. 17, Fig. 18, Fig. 19, Fig. 20, Fig. 22, Fig. 24), die gegenüber den Rippen 37 versetzt sein können (Fig. 4, Fig. 6, Fig. 9, Fig. 15, Fig. 17, Fig. 20). Beim Großteil dieser Dichtungsringe sind die verdickten Teile 18 mit etwa trapezförmigem Querschnitt geformt (Fig. 4 bis 12, Fig. 14 bis 24); dabei wurde als weitere Modifikation gemäß den Fig. 15 bis 24 der verdickte Dichtungsteil 18' mit etwa trapezförmigem Querschnitt an seiner Innenseite zwischen seinen Flanken und der hier wieder vorgesehenen ringförmigen Verdickung 29 ausgehöhlt, was die Elastizität bzw. das Gewicht des Dichtungsringes beeinflussen kann. Fig. 13 zeigt noch eine weitere Variante des Dichtungsringes mit einem verdickten Ringteil 39, dessen Querschnitt von der Trapezform abweicht; es handelt sich um einen etwa kreisförmigen Querschnitt mit einem Fortsatz 40, der wieder als Abstreif- bzw. Reinigungslippe dient. Diese Ausführung hat wieder einen dünneren Dichtungsteil 24 mit wellenförmigem Querschnitt. Statt der Wellen können gemäß den Fig. 10 und 21 auch kantige Ausbildungen mit zickzackförmigem Querschnitt vorgesehen werden. Die vorerwähnten Rippen können rechteckigen, dreieckigen oder halbkreisförmigen Querschnitt besitzen. Die am dünnwandigen Dichtungsteil bzw. an dessen Wand 35 vorgesehenen Innenrippen 37 besitzen vorteilhaft den gleichen Innendurchmesser. Gleiches gilt für die Wellen. Die außen an der Wand vorgesehenen Rippen 38 weisen zweckmäßig den gleichen Außendurchmesser auf.

Fig. 25 zeigt ein weiteres Ausführungsbeispiel der Erfindung. Diese Ausbildung gleicht im wesentlichen der nach den Fig. 1 bis 3, wobei allerdings die Muffenaufweitung 6 für den Dichtungsring 5 und dieser selbst einen größeren Abstand vom Muffenende besitzt, so daß eine zusätzlich verbesserte Führung des Spitzendes 1 beim Einbringen des Rohres 4 in die Muffe 3 bzw. Dichtung 5 erreichbar ist. Vorteilhaft beträgt im allgemeinen das Verhältnis der Länge des Muffenendteiles vor der Dichtung zum Durchmesser des Rohrspitzendes 0,2 : 1, insbesondere mindestens 0,4 : 1. Zwischen Rohraußenmantel 9 und den Muffeninnenmantelteilen 11,12 ist wieder ein gleich großes Spiel im Rohrverbindungsbereich vorgesehen, wobei sich naturgemäß im Bereich der Dichtung 5 durch die hiefür vorhandene Muffenaufweitung 6 ein wesentlich vergrößertes Spiel ergibt. Wie bereits erwähnt, ist das Verhältnis der Dichtungsringlänge zum Rohraußendurchmesser maximal 0,8 : 1, mindestens 0,2 : 1.

## Patentansprüche

1. Rohrverbindung, insbesondere Steckverbindung, vorzugsweise von Kunststoff- oder Metallrohren, bei denen das mit Ausnahme des angespitzten Endes mit zylindrischem Außenmantel ausgeführte Spitzende des einen Rohres in das zu einer Verbindungsmuffe aufgeweitzte Ende des anderen Rohres eingeschoben ist, wobei diese Aufweitung nur im Abstand vom Muffenende innen eine ringförmige Vertiefung unterschiedlicher Tiefe zur Aufnahme des Dichtungsringes allein im Bereich dieser Vertiefung aufweist, sowie diese Muffe neben der Vertiefung mit zylindrischem Innenmantel ausgeführt ist und der Dichtungsring Bereiche unterschiedlicher Dicke besitzt, wobei in dessen muffenendseitigem Bereich ein verdickter Ringteil vorgesehen ist und mit diesem verdickten Dichtungsringteil mindestens ein gegenüber diesem dünnerer Dichtungsteil verbunden ist, wobei im Verbindungsbereich der Innenmantel der Verbindungsmuffe beiderseits der Vertiefung einen gleichgroßen Durchmesser aufweist und das eingeschobene Rohr zumindest im Verbindungsbereich einen im Vergleich zum Innenmanteldurchmesser der Verbindungsmuffe kleineren, über seine ganze Länge mit Ausnahme des angespitzten Endes gleichgroßen Außendurchmesser besitzt, dadurch gekennzeichnet, daß bei zusammenfallenden Achsen der Muffe (3) und des eingeführten Rohres (2) gleiches, auch bei zusammengesetzter Rohrverbindung vorhandenes Spiel zwischen dem Außenmantel (9) dieses Rohres (2) und dem Innenmantel (11,12) der Muffe (3) beiderseits der Vertiefung (6) - ausgenommen im Bereich des Muffenhalses (13) und im Bereich des Spitzendes (10) des Rohres (2) - vorgesehen ist, wobei der dünnere Dichtungsteil (24,36) bereits vor Einbringung der Dichtung (5) in die Rohrverbindung einen durchschnittlich achsparallel verlaufenden Mantel aufweist.

2. Rohrverbindung nach Anspruch 1, dadurch gekennzeichnet, daß der Durcnmesser des Innenmantels (11,12) der Verbindungsmuffe (3) beiderseits der Vertiefung (6) sich zum Außendurchmesser des eingebrachten Rohres (1) annähernd 11,1 : 11 verhält (d.h. daß z.B. diese Durchmesser 111 mm bzw. 110 mm betragen).

3. Rohrverbindung nach Anspruch 1 oder 2, dadurch gekennzeichnet, daß der Dichtungsring (5), der aus dem dünneren Dichtungsringteil (24) mit achsparallel verlaufendem Mantel und einem damit verbundenen verdickten Teil (18) mit einem Querschnitt (19) mit steilen Flanken, insbesondere mit trapezförmigem Querschnitt, besteht, sowie daß die diesen Dichtungsring (5) aufnehmende Muffenvertiefung (6), die im Bereich des Vertiefungsteiles (7) einen Querschnitt mit steilen Flanken, insbesondere mit etwa trapezförmigen Flanken, besitzt, einen geringeren Abstand vom Muffenende als vom Muffenhals (13) aufweist, wobei sich diese Abstände vorzugsweise etwa wie 50 : 80 verhalten, bei einer Gesamtlänge des Dichtungsringes (5) bzw. der Muffenvertiefung von annähernd 37,5 bzw. 46 mm annähernd 50 zu 80 mm betragen.

4. Rohrverbindung nach einem der Ansprüche 1 bis 3, dadurch gekennzeichnet, daß an der Innenwand des mit dem dünneren Dichtungsringteil (24) mit achsparallel verlaufendem Mantel verbundenen verdickten Dichtungsringteiles (18), insbesondere in der Innenwandmitte, eine zur Ringachse gerichtete ringförmige Verdickung (29) angeordnet ist.

5. Rohrverbindung nach einem der Ansprüche 1 bis 4, dadurch gekennzeichnet, daß die Flanken des mit dem dünneren Dichtungsringteil (24) mit achsparallel verlaufendem Mantel verbundenen verdickten Dichtungsringteiles (18) bzw. die Flanken des Vertiefungsteiles (7) mit größerer Tiefe, insbesondere die Trapezflanken, vor allem die muffenendseitigen Flanken (20,22), einen Winkel von 15 bis 25°, insbesondere von 20°, mit queraxialen Ebenen einschließen.

6. Rohrverbindung nach einem der Ansprüche 1 bis 5, dadurch gekennzeichnet, daß das Verhältnis der Länge des mit dem dünneren Dichtungsringteil (24) mit achsparallel verlaufende Mantel versehenen Dichtungsringes (5) zum Rohrdurchmesser mindestens 0,2 : 1, maximal 0,8 : 1, beträgt.

7. Rohrverbindung nach einem der Ansprüche 1 bis 6, dadurch gekennzeichnet, daß die Shore-Härte des mit dem dünneren Dichtungsringteil (24) mit achsparallel verlaufendem Mantel versehenen Dichtungsringes (5) zwischen 40 ± 5 und 56 ± 5 Shore A beträgt, wobei das Ringmaterial bevorzugt aus Elastomeren, Copolymerisaten, aushärtendem bzw. thermoplastischem elastischen Kunststoff, Polyäthylen, beispielsweise Gummi, besteht.

8. Rohrverbindung nach einem der Ansprüche 1 bis 7, dadurch gekennzeichnet, daß der dünnere Dichtungsringteil (24,36) eine annähernd achsparallel verlaufende bzw. zylindrische Wand mit wellenförmigem Querschnitt mit annähernd konstanter Stärke aufweist, wobei bevorzugt mindestens zwei Dichtungsringwellen (34,35) vorgesehen sind und zweckmäßig das Ende (26) der letzten Querschnittswelle von mehreren, insbesondere drei, Querschnittswellen einwärts gerichtet ist.

9. Rohrverbindung nach einem der Ansprüche 1 bis 8, dadurch gekennzeichnet, daß der dünnere Dichtungsringteil (24,36) eine annähernd achsparallele bzw. zylindrische Wand (36) aufweist, an der innen zwei oder mehrere ringförmige Dichtungsrippen (37) vorgesehen sind, wobei bevorzugt außerdem an dieser zylindrischen Wand außen, insbesondere axial zu den innen angeordneten Dichtungsrippen (37) versetzte, ringförmige Dichtungsrippen (38) vorhanden sind.

10. Rohrverbindung nach Anspruch 8 oder 9, dadurch gekennzeichnet, daß die Innendurchmesser sämtlicher Dichtungsrippen (37) bzw. sämtlicher einwärts gerichteter Wellen (33,34,35) annähernd gleich groß sind.

11. Rohrverbindung nach einem der Ansprüche 8 bis 10, dadurch gekennzeichnet, daß die Außendurchmesser sämtlicher Dichtungsrippen (38) bzw. sämtlicher auswärts gerichteter Wellen annähernd gleich groß sind.

12. Rohrverbindung nach einem der Ansprüche 8 bis 11, dadurch gekennzeichnet, daß der Innendurchmesser des dünneren Dichtungsringteiles (24,36) bzw. dessen Innenrippen (37) bzw. dessen einwärts gerichteter Dichtungswellen (33,34,35) kleiner ist als der Innendurchmesser des verdickten Dichtungsringteiles (18,18',39), insbesondere von dessen muffenendseitiger Flanke (20) und/oder von dessen ringförmiger Verdickung (29) an dessen Innenwandmitte, sich vorzugsweise wie 10,5 : 10,9 verhalten, was beispielsweise bei einer Höhe des verdickten Dichtungsringteiles (18,18',39) von 15,5 mm 105 bzw. 109 mm ergibt.

13. Rohrverbindung nach einem der Ansprüche 1 bis 12, dadurch gekennzeichnet, daß der mit dem dünneren Dichtungsringteil (36) verbundene verdickte Dichtungsringteil (18'), insbesondere der Dichtungsringteil (18') mit etwa trapezförmigem Querschnitt an der einwärts gerichteten Seite zwischen den Flanken und der ringförmigen Verdickung (29) ausgehöhlt ist.

14. Rohrverbindung nach einen der Ansprüche 1 bis 13, dadurch gekennzeichnet, daß das Verhältnis der Länge des zylindrischen Innenmantels des vor der Dichtungsaufweitung (6) befindlichen Muffenendteiles (11) zum Durchmesser des Rohrspitzendes (1) 0,2 : 1, insbesondere 0,4 : 1, beträgt.

15. Rohrverbindung nach einem der Ansprüche 1 bis 14, dadurch gekennzeichnet, daß die muffenendseitige Flanke (20) des verdickten Dichtungsringteiles (18) nach innen vorsteht bzw. länger ist als die in Verbindungsstellung anliegende Flanke (22) der diesen Dichtungsringteil (18) aufnehmenden Muffenvertiefung (7) der Rohrmuffe, und vorzugsweise auch länger als die Flanke (23) der Muffe ist.

## Claims

1. A pipe coupling, in particular an insertion-type coupling, preferably for pipes of plastics material or metal, wherein the tip end of the one pipe, which, except for a tapered end, has a cylindrical external surface, is inserted into the end of the other pipe expanded to a coupling sleeve, this expanded portion having, inside at a distance from the end of the sleeve only, an annular groove of varying depth to receive a sealing ring only in the area of this groove, and this sleeve beside the groove having a cylindrical internal surface and the sealing ring having regions of different thickness, a thickened portion of the ring being provided in its sleeve end-side region and at least one sealing portion thinner with respect to it being connected to this thickened portion of the sealing ring, the internal surface of the coupling sleeve having the same diameter on either side of the groove in the coupling region and the inserted pipe having, at least in the coupling region, the same outside diameter over its full length except for the tapered end, which outside diameter is smaller if compared to the diameter of the internal surface of the coupling sleeve, characterized in that, when the axes of the sleeve (3) and of the inserted pipe (2) are coincident, provision is made for an equal clearance between the external surface (9) of this pipe (2) and the internal surface (11,12) of the sleeve (3) on either side of the groove (6) -- except for the region of the sleeve neck (13) and the region of the tip end (10) of the pipe (2) -- even when the pipes are coupled, the thinner portion of the sealing (24,36) having a jacket which, on average, runs parallel to the axis prior to insertion of the sealing (5) into the pipe coupling already.

2. The pipe, coupling according to claim 1, characterized in that the ratio of the diameter of the internal surface (11,12) of the coupling sleeve (3) on either side of the groove (6) to the exterior diameter of the inserted pipe (1) is approximately 11.1 : 11 (i.d. that these diameters amount to e.g. 111 mm and 110 mm, respectively.

3. The pipe coupling according to claim 1 or claim 2, characterized in that the sealing ring (5) consisting of the thinner sealing ring portion (24), the jacket of which runs parallel to the axis, and of a thickened portion (18) connected therewith and having a cross-section (19) with steep flanks, in particular a trapezoidal cross-section, and in that the sleeve groove (6) receiving this sealing ring (5), which has a cross-section with steep flanks, in particular approximately trapezoidal flanks, in the region of the groove portion (7), are located at a shorter distance from the end of the sleeve than from the sleeve neck (13), the ratio of these distances preferably being approximately 50:80, amounting to approximately 50 to 80 mm at a total length of the sealing ring (5) and the sleeve groove, respectively, of approximately 37.5 and 46 mm, respectively.

4. The pipe coupling according to any of claims 1 to 3, characterized in that an annular enlargement (29) directed towards the ring axis is provided at the interior wall, in particular at the center of the interior wall, of the thickened sealing ring portion (18) connected to the thinner sealing ring portion (24), the jacket of which runs parallel to the axis.

5. The pipe coupling according to any of claims 1 to 4, characterized in that the flanks of the thickened portion of the sealing ring (18) connected to the thinner sealing ring portion (24), the jacket of which runs parallel to the axis, and the flanks of the groove portion (7) with greater depth, in particular the trapezoidal flanks, above all the sleeve end-side flanks (20,22), respectively, form an angle of 15 to 25°, in particular 20°, with planes transversal to the axes.

6. The pipe coupling according to any of claims 1 to 5, characterized in that the ratio of the length of the sealing ring (5) provided with the thinner sealing ring part (24), the jacket of which runs parallel to the axis, to the diameter of the pipe is at least 0.2 : 1 and at most 0.8 : 1.

7. The pipe coupling according to any of claims 1 to 6, characterized in that the Shore hardness of the sealing ring (5) provided with the thinner sealing ring portion (24), the jacket of which runs parallel to the axis, is between 40 ± 5 and 56 ± 5 Shore A, the material of the ring preferably consisting of elastomers, copolymers, age hardening and thermoplastic elastoplastics, respectively, polyethylene, e.g. rubber.

8. The pipe coupling according to any of claims 1 to 7, characterized in that the thinner sealing ring portion (24,36) has a wall that is approximately parallel to the axis and cylindrical, respectively, being of undulating cross-section with approximately constant size, preferably at least two sealing ring undulations (34,35) being provided and conveniently the end (26) of the last cross-section undulation of several, in particular three, cross-section undulations being turned inwards.

9. The pipe coupling according to any of claims 1 to 8, characterized in that the thinner sealing ring portion (24,36) has a wall (36) that is approximately parallel to the axis and cylindrical, respectively, at the inside of which wall there are provided two or several annular sealing ribs (37), there being in addition preferably provided annular sealing ribs (38) at the outside of this cylindrical wall, in particular staggered axially in relation to the sealing ribs (37) located at the inside.

10. The pipe coupling according to any of claims 8 or 9, characterized in that the inside diameters of all sealing ribs (37) and of all undulations (33,34,35) facing inwards, respectively, are approximately the same.

11. The pipe coupling according to any of claims 8 to 10, characterized in that the outside diameters of all sealing ribs (38) and of all undulations facing outwards, respectively, are approximately the same.

12. The pipe coupling according to any of claims 8 to 11, characterized in that the inside diameter of the thinner sealing ring portion (24,36), its inside ribs (37) and its sealing undulations (33,34,35) facing inwards, respectively, is smaller than the inside diameter of the thickened sealing ring portion (18,18',39), in particular of its sleeve end-side flank (20) facing the end of the sleeve and/or of its annular enlargement (29) at the center of its interior wall, their ratio preferably being 10.5 : 10.9, e.g. amounting to 105 and 109 mm, respectively, in case of a height of the thickened sealing ring portion (18,18',39) of 15.5 mm.

13. The pipe coupling according to any of claims 1 to 12, characterized in that the thickened sealing ring portion (18') connected to the thinner sealing ring portion (36), in particular the sealing ring portion (18') of approximately trapezoidal cross-section, is hollow at the inward facing side between the flanks and the annular enlargement (29).

14. The pipe coupling according to any or claims 1 to 13, characterized in that the ratio of the length of the cylindrical internal surface of that portion (11) of the end of the sleeve located in front of the expanded portion (6) of the sealing to the diameter of the tip end of the pipe (1) is 0.2 : 1, in particular 0.4 : 1.

15. The pipe coupling according to any of claims 1 to 14, characterized in that the sleeve end-side flank (20) of the enlarged sealing ring portion (18) protrudes inwards and is longer than that flank (22) of the sleeve groove (7) of the pipe sleeve receiving this sealing ring portion (18), which flank is adjacent in the coupling position, respectively, and preferably also longer than the flank (23) of the sleeve.

## Revendications

1. Raccord de tuyaux, en particulier du type enfichage, préférablement pour des tuyaux plastiques ou métalliques, dans lesquels l'extrémité pointue de l'un des tuyaux, qui, à l'exception de l'extrémité appointue, a une surface extérieure cylindrique, est introduite dans l'extrémité de l'autre tuyau, évasée pour former un manchon de jonction, cette partie évasée ayant à l'intérieur, seulement à une distance de l'extrémité du manchon, une gorge annulaire de profondeur variable pour recevoir l'anneau d'étanchéité seulement dans le domaine de cette gorge, et ce manchon à côté de la gorge ayant une surface intérieure cylindrique et l'anneau d'étanchéité ayant des domaines d'épaisseur différente, une partie épaissie de l'anneau étant pourvue dans son domaine au côté de l'extrémité du manchon et au moins une partie d'étanchéité de plus faible épaisseur que celle-là étant reliée avec cette partie épaissie de l'anneau d'étanchéité, la surface intérieure du manchon de jonction ayant le même diamétre des deux côtés de la gorge dans le domaine de jonction, et le tuyau introduit (2) ayant, au moins dans le domaine de jonction, le même diamètre extérieur, inférieur au diamètre de la surface intérieure du manchon de jonction, sur toute sa longueur à l'exception de l'extrémité appointue, caractérisé en ce que, si les axes du manchon (3) et du tuyau introduit (2) sont coincidents, il y a un jeu égal entre la surface extérieure (9) de ce tuyau (2) et la surface intérieure (11,12) du manchon (3) des deux côtés de la gorge (6) - à l'exception du domaine du col (13) du manchon et du domaine de l'extrémité pointue (10) du tuyau (2) - meme si les tuyaux sont abouchés, la partie de joint (24,36) de plus faible épaisseur ayant une chemise de cours en moyenne parallèle à l'axe déjà avant l'introduction du joint (5) dans le raccord de tuyaux.

2. Raccord de tuyaux selon la revendication 1, caractérisé en ce que le rapport du diamètre de la surface intérieure (11,12) du manchon de jonction (3) des deux côtés de la gorge (6) au diamètre extérieur du tuyau introduit (1) est à peu près 11,1 : 11 (c'est à dire que, par exemple, ces diamètres sont respectivement 111 mm et 110 mm).

3. Raccord de tuyaux selon la revendication 1 ou 2, caractérisé en ce que l'anneau d'étanchéité (5), qui consiste en la partie (24) à plus faible épaisseur de l'anneau d'étanchéité, dont la chemise a un cours parallèle à l'axe, et en une partie (18) épaissie reliée avec elle, partie ayant une section transversale (19) avec des flancs raides, en particulier une section transversale trapézoidale, et en ce que la gorge de manchon (6) recevant cet anneau d'étanchéité (5), qui a une section transversale avec flancs raides, en particulier avec des flancs approximativement trapézoidaux, dans le domaine de la partie de gorge (7), se trouvent à une distance plus faible de l'extrémité du manchon que du col du manchon (13), ces distances préférablement ayant un rapport d'environ 50 à 80, étant d'environ 50 à 80 mm avec une longueur totale respectivement de l'anneau d'étanchéité (5) et de la gorge du manchon d'approximativement 37,5 ou bien 46 mm.

4. Raccord de tuyaux selon l'une des revendications 1 à 3, caractérisé en ce qu'un épaississement annulaire (29) dirigé vers l'axe de l'anneau est pourvu à la paroi intérieure, en particulier au centre de la paroi intérieure, de la partie épaissie (18) de l'anneau d'étanchéité, reliée à la partie (24) de plus faible épaisseur de l'anneau d'étanchéité, dont la chemise est parallèle à l'axe.

5. Raccord de tuyaux selon l'une des revendication 1 à 4, caractérisé en ce que respectivement les flancs de la partie épaissie (18) de l'anneau d'étanchéité, reliée à la partie (24) de plus faible épaisseur de l'anneau d'étanchéité, dont la chemise est parallèle à l'axe, et les flancs de la partie de gorge (7) ayant une profondeur plus grande, en particulier les flancs trapézoidaux, avant tout les flancs (20,22) au côté de l'extrémité du manchon, forment un angle de 15 à 25°, en particulier 20°, avec des plans transversaux relatifs à l'axe.

6. Raccord de tuyaux selon l'une des revendications 1 à 5, caractérisé en ce que le rapport du longueur de l'anneau d'étanchéité (5), pourvu de la partie (24) de plus faible épaisseur de l'anneau d'étanchéité, dont la chemise est parallèle à l'axe, au diamètre du tuyau est au moins 0,2 : 1 et n'excède pas 0,8 : 1.

7. Raccord de tuyaux selon l'une des revendications 1 à 6, caractérisé en ce que la dureté Shore de l'anneau d'étanchéité (5), pourvu de la partie (24) de plus faible épaisseur de l'anneau d'étanchéité, dont la chemise est parallèle à l'axe, est entre 40 ± 5 et 56 ± 5 Shore A, la matière de l'anneau préférablement consistant en élastomères, copolymères, matière synthétique élastique respectivement thermodurcissable et thermoplastique, polyéthylène, par exemple en caoutchouc.

8. Raccord de tuyaux selon l'une des revendications 1 à 7, caractérisé en ce que la partie (24,36) de plus faible épaisseur de l'anneau d'étanchéité présente une paroi étant aproximativement parallèle à l'axe ou bien cylindrique et ayant une section transversale ondulée avec une épaisseur approximativement constante, préférablement au moins deux ondulations (34,35) de l'anneau d'étanchéité étant pourvues et l'extrémité (26) de la dernière ondulation en section transversale de plusieurs, en particulier de trois ondulations en section transversale, étant appropriément dirigée vers l'intérieur.

9. Raccord de tuyaux selon l'une des revendications 1 à 8, caractérisé en ce que la partie (24,36) de plus faible épaisseur de l'anneau d'étanchéité présente une paroi (36) approximativement parallèle à l'axe ou bien cylindrique, à l'intérieur de laquelle deux ou plusieurs nervures d'étanchéité annulaires (37) sont pourvues, pendant que préférablement il y a aussi des nervures d'étanchéité annulaires (38) à l'extérieur de cette paroi cylindrique, en particulier désaxées relativement aux nervures d'étanchéité (37) arrangées à l'intérieur.

10. Raccord de tuyaux selon la revendication 8 ou la revendication 9, caractérisé en ce que les diamètres intérieurs de respectivement toutes les nervures d'étanchéité (37) et toutes les ondulations (33,34,35) dirigées vers l'intérieur sont approximativement égaux.

11. Raccord de tuyaux selon l'une des revendications 8 à 10, caractérisé en ce que les diamètres extérieurs de respectivement toutes les nervures d'étanchéité (38) et toutes les ondulations dirigées vers l'extérieur sont approximativement égaux.

12. Raccord de tuyaux selon l'une des revendications 8 à 11, caractérisé en ce que le diamètre intérieur de la partie (24,36) de plus faible épaisseur de l'anneau d'étanchéité ou bien les nervures intérieures (37) de celle-ci ou bien les ondulations d'étanchéité (33,34,35) dirigées vers l'intérieur de celle-ci est inférieur au diamètre intérieur de la partie épaissie (18,18',39) de l'anneau d'étanchéité, en particulier du flanc (20) au coté de l'extrémité du manchon de celle-ci, et/ou de l'épaississement annulaire (29) de celle-ci au centre de sa paroi intérieure, le rapport entre eux préférablement étant 10,5 : 10,9, ce qui par exemple resulte en respectivement 105 mm et 109 mm quand l'hauteur de la partie épaissie (18,18',39) de l'anneau d'étanchéité est 15,5 mm.

13. Raccord de tuyaux selon l'une des revendications 1 à 12, caractérisé en ce que la partie épaissie (18') de l'anneau d'étanchéité, reliée à la partie (36) de plus faible épaisseur de l'anneau d'étanchéité, en particulier la partie (18') de l'anneau d'étanchéité de section transversale approximativement trapézoidale, est creuse au côté dirigé vers l'intérieur entre les flancs et l'épaississement annulaire (29).

14. Raccord de tuyaux selon l'une des revendications 1 à 13, caractérisé en ce que le rapport de la longueur de la surface cylindrique intérieure de la partie (11) de l'extrémité du manchon située devant la partie évasée (6) du joint, au diamètre de l'extrémité appointue de tuyau (1) est 0,2 : 1, en particulier 0,4 : 1.

15. Raccord de tuyaux selon l'une des revendications 1 à 14, caractérisé en ce que le flanc (20) au côté de l'extrémité du manchon de la partie épaissie (18) de l'anneau d'étanchéité dépasse vers l'intérieur ou bien est plus longue que le flanc (22) de la gorge (7) du manchon du tuyau recevant cette partie (18) de l'anneau d'échantéité, flanc adjacente en position de jonction, et préférablement aussi plus longue que le flanc (23) du manchon.
